# EUROPÄISCHE PATENTSCHRIFT

(11) **EP 2 553 474 B1**
(45) Veröffentlichungstag und Bekanntmachung des Hinweises auf die Patenterteilung: **30.07.2014**
(21) Anmeldenummer: 11704751.4
(22) Anmeldetag: 10.02.2011
(51) Int. Cl.: F16C 41/00, G01P 3/44

(54) **RADLAGERANORDUNG MIT SENSORANSCHLAG**
WHEEL BEARING ARRANGEMENT WITH SENSOR STOP
DISPOSITIF DE PALIER DE ROUE COMPORTANT UNE BUTÉE DE CAPTEUR

(30) Priorität: 29.03.2010 DE 102010013214
(43) Veröffentlichungstag der Anmeldung: 06.02.2013
(73) Patentinhaber: Schaeffler Technologies AG & Co. KG, 91074 Herzogenaurach (DE)
(72) Erfinder: HEIM, Jens, 97493 Bergrheinfeld (DE)
(86) Internationale Anmeldenummer: PCT/EP2011/051950
(87) Internationale Veröffentlichungsnummer: WO 2011/120732

(56) Entgegenhaltungen:
- EP-A2- 0 822 413
- DE-T2- 69 406 834
- US-A- 5 640 087
- US-B1- 6 231 241
- US-B1- 6 457 869

## Beschreibung

### Gebiet der Erfindung

Die Erfindung betrifft eine Radlageranordung, insbesondere für Nutzkraftfahrzeuge, mit einem drehenden Außenring einem feststehenden Innenring und zwischen den Ringen abrollbaren Wälzkörpern, wobei der Innenring auf einem feststehenden Achszapfen und der Außenring innerhalb einer einen Signalgeber aufweisende Radnabe fest sind.

### Stand der Technik

### Hintergrund der Erfindung

Bei Radlager mit drehenden Außenringen sind in Bezug auf die Fahrsicherheit Vorkehrungen zum Schutz des Fahrers und anderer Verkehrsteilnehmer zu treffen, da diese meist in Nutzfahrzeugen mit großem Gewicht zum Einsatz kommen und folglich ein hohes Gefahrenpotential mit sich bringen.

Drehzahlsensoren, die zur Detektion der Drehgeschwindigkeit des Rades eingesetzt werden, liefern einen Beitrag zur Sicherheit, indem mit diesen Anti-Blockiersysteme vorteilhaft betreiben werden können. Allerdings stellt sich das Problem der sicheren Befestigung und genauen Positionierung. Ein Drehzahlsensor wird derzeit am Achszapfen festgeschraubt und danach wird die Radnabe mit dem Signalgeber installiert. Die axiale Position des Sensors auf dem Achszapfen und die Position des Außenrings bestimmen den Detektionsabstand zwischen Sensor und Signalgeber. Dies erschwert die Installation nachhaltig, da eine hohe Präzision beim Einpressen des Radlagers gewährleistet werden muss und die Position des Sensors nicht nachträglich verändert werden darf.

Eine Radlageranordnung der gattungsbildenden Art ist in der US 5 640 087 beschrieben. Die Radlageranordnung weist ein Sensorelement auf, welches mittels eines Vorspannelementes an einen Encoder gedrückt wird.

Aus DE 694 06 834 T4 ist eine Sensoranordnung für ein Radlager mit drehendem Außenring bekannt, wobei der Drehzahlsensor in radialer Richtung durch einen Schnappmechanismus an einem kaltumgeformten Blechteil positionierbar und befestigbar ist. Eine derartig komplizierte Positionier- und Befestigungsvorrichtung erfordert einen hohen Herstellungsaufwand und ist während des Betriebes anfällig für nachteilige Deplatzierungen des Sensors. Außerdem ist die Bauteilanzahl der Sensoranordnung unvorteilhaft hoch.

Die EP 0 822 413 A2 offenbart eine Radlageranordnung, mit einem Sensor. Der Sensor weist einen hervorstehenden Abschnitt auf. Der hervorstehenden Abschnitt greift in eine Nut des Innenrings ein. Der Innenring welcher eine Anschlagfläche für einen Innenring ausbildet.

Die US 6 457 869 B1 zeigt eine Radlageranordnung, bei dem ein Sensor ein axial hervorstehendes Teil aufweist. Dieses axial hervorstehende Teil liegt nach der Montage des Sensors an dem Innenring der Lagereinheit an.

### Aufgabenstellung

### Zusammenfassung der Erfindung

Die Aufgabe der Erfindung ist daher die Installation einer Radlageranordnung mit Sensoranordnung zu vereinfachen und die Positionierungsgenauigkeit des Sensors zu erhöhen, sowie die vorgenannten Nachteile zu kompensieren.

Die Aufgabe wird durch eine Radlagereinheit der eingangs genannten Art dadurch gelöst, dass ein mit dem Signalgeber in Wechselwirkung stehender Sensor im axialen Anschlag mit dem Innenring angeordnet und mit einem Befestigungsmittel am Achszapfen befestigt ist.

Die Radlageranordung ist mit einem drehenden Außenring, einem feststehenden Innenring und zwischen den Ringen abrollbaren Wälzkörpern vorgesehen. Der Außenring ist ein Lagerring, der eine Innenlaufbahn der Wälzkörper bildet, genau so wie der Innenring eine Außenlaufbahn für die Wälzkörper bildet. Damit wird die Last während des Radlagerbetriebes vom Außenring auf die Wälzkörper und von diesen auf den Innenring übertragen.

Dabei ist der Innenring auf einem feststehenden Achszapfen und der Außenring innerhalb einer einen Signalgeber aufweisende Radnabe fest, Die Radnabe umfasst das Radlager oder bildet sogar den Außenring aus. Der Achszapfen kann mehrteilig ausgeführt sein, wobei der Innenring auf diesem befestigt, insbesondere aufgepresst, oder angeformt ist.

Der Signalgeber ist ein ringförmiger Teil der Sensoranordnung und kann als ein sog. Encoder ausgeführt sein. Dabei bietet sich ein Encoder aus Wellblech oder einem gestanzten Blech an. Alternativ kann ein Multipolencoder verwendet werden, der abwechselnd magnetische Nord- und Südpole aufweist.

Erfindungsgemäß ist ein mit dem Signalgeber in Wechselwirkung stehender Sensor im axialen Anschlag mit dem Innenring angeordnet und mit einem Befestigungsmittel oder mehreren Befestigungsmitteln am Achszapfen befestigt. Der Innenring ist in seiner Betriebsposition derart zugänglich, dass der Sensor, beispielsweise ein Drehzahlsensor, der auf Anschlag axial an den Innenring herangeschoben wird. In dieser durch den Anschlag festgelegten Position ist der Sensor auch am Achszapfen oder an einem Bestandteil desselben befestigbar. Eine axiale Anschlagfläche des Innenringes und eine axiale Anschlagfläche des Sensors werden hierbei zusammengeführt und liegen aneinander an. Der Anschlag der beiden Flächen kann hierbei von dem Signalgeber und/oder dem Außenring umfasst werden.

Ein in axialer Richtung hervorstehender Teil des Sensors weist eine axiale Anschlagfläche auf. Dieser hervorstehende Teil steht in Bezug zum restlichen Sensor axial hervor, insbesondere zum detektierenden Teil des Sensors. Beispielsweise ist der hervorstehende Teil in Umfangsrichtung teilweise ringförmig ausgebildet. Dadurch wird der Sensor durch die im Wesentlichen zylindrische Außenfläche des Achszapfens axial geführt und in radiale Richtungen stabilisiert.

Die axiale Anschlagfläche des Sensors liegt unter Vorspannung am Innenring an. Die Vorspannung wird durch ein Federelement hervorgerufen, welches zwischen einer axialen Fläche des Achszapfens und einer axialen Fläche des Sensors angeordnet ist. Die Vorspannung führt zu einem Kontakt des Innenrings und des Sensors, der auch beim Betätigen des Befestigungsmechanismus nicht unterbrochen wird. Die axiale Vorspannung kann also im befestigten und im unbefestigten Zustand aufrecht erhalten werden. Damit ist gewährleistet, dass die Position des Sensors nicht durch eine zu starke Torsionswirkung bei der Verschraubung nachteilig verändert wird.

Der axial hervorstehende Teil ist teilweise oder ganz vom Signalgeber umfasst. Damit bleibt der Signalgeber zusammen mit dem Radlager auf dem Achszapfen installierbar. Die Herbeiführung des Anschlages kann ohne direkte Einsicht auf die Anschlagsflächen erfolgen.

Vorteilhafterweise ist der Außenring einstückig mit der Radnabe ausgebildet und weist eine oder zwei Innenlaufbahnen für Wälzkörper auf. Dadurch wird die Bauteilanzahl vorteilhaft reduziert. Optional kann ein separat von der Radnabe ausgebildeter Außenring zwei Wälzkörperlaufbahnen aufweisen und/oder aus einem hochwertigerem Material hergestellt sein. Die einfachste Option beinhaltet zwei separate Außenringe mit jeweils einer Innenlaufbahn auf.

Als Befestigungsmittel des Sensors kann eine Schraube und ein Langloch eingesetzt werden. Das Langloch am Sensor ermöglicht einen Zugang zu einem Innengewinde im Achszapfen oder einem Bestandteil desselben, womit der Sensor in verschiedenen Positionen fixierbar und befestigbar ist. Das Langloch kann dabei einem radial zur Rotationsachse des Radlagers außen gelegenen Teil des Sensors angeformt sein, der auch bei installierter Radlagereinheit zugänglich ist. Alternativ können auch andere bekannte Befestigungsmittel verwendet werden, die eine ähnliche Wirkung wie eine Schraubung erzielen. Es könnte z.B. ein Bolzen in Verbindung mit dem Langloch zur Befestigung verwendet werden. Alternativ könnte der Sensor angeschweißt, angeklebt oder angeklemmt werden.

Weitere vorteilhafte Ausbildungen und bevorzugte Weiterbildungen der Erfindung sind der Figurenbeschreibung und/oder den Unteransprüchen zu entnehmen.

Im Folgenden wird die Erfindung anhand der in den Figuren dargestellten Ausführungsbeispielen näher beschrieben und erläutert.

Es zeigen:
- Fig. 1: eine beispielhafte, nicht beanspruchte Radlageranordnung im Längsschnitt zur ihrer Rotationsachse mit einem am Innenring anschlagenden Sensor, und
- Fig. 2: eine Radlageranordnung im Längsschnitt zur ihrer Rotationsachse mit einem am Innenring anschlagenden, vorgespannten Sensor.

### Ausführungsbeispiele

### Beschreibung der Zeichnungen

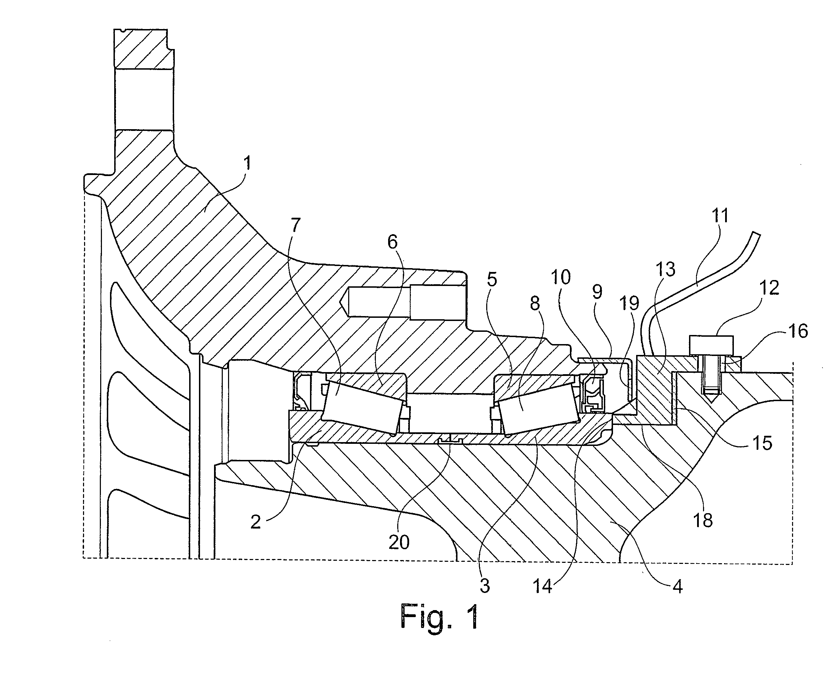

Fig. 1 zeigt eine beispielhafte, nicht beanspruchte Radlageranordnung im Längsschnitt zur ihrer Rotationsachse mit einem am Innenring 3 anschlagenden Sensor 13.

Das im Längsschnitt gezeigte Radlager weist eine Radnabe 1 mit angeformtem Radflansch auf und hat zwei Außenringe 5,6 des zweireihigen Kegelrollenlagers eingepresst. Die Vorspannung des Lagers verläuft von der Radnabe 1 über die beiden Außenringe 5,6, die Wälzkörper 7,5 und die beiden Innenringe 2,3, wobei die beiden Innenringe 2,3 axial über einen Sicherungsring 20 zusammengehalten werden.

Am getriebeseitigen Ende der Radnabe 1 ist ein Signalgeber 9, der als Multipolencoder ausgeführt ist, aufgesetzt, der in seinem scheibenförmigen Teil einen signalgebenden Bereich 19 mit alternierenden magnetischen Nord- und Südpolen aufweist. Die Bewegungen des Multipolencoders 9 werden im Sensor 15 detektiert, der auf dem Achszapfen 4 mit der Schraube befestigt ist.

Der Sensor 15 hat eine S-Form und ist axial zwischen dem Achszapfen 4 und dem Multipolencoder 9 mit einem Axialspiel angeordnet. Dieses Axialspiel liegt nur dann vor, wenn die Befestigungsschraube 12 nicht festgezogen ist. Die Schraube 12 kann zwar durchaus im Achszapfen 4 eingeschraubt sein, jedoch ist der Sensor 14 bei nicht angezogener Schraube 12 axial bis zu einem Anschlag mit dem Innenring 3 bewegbar. Dies wird auch durch den Freiraum 15 zum Achszapfen hin und das Langloch 16 ermöglicht, wobei das Langloch 16 in axialer Richtung orientiert ist. Der Anschlag findet mit der Axialanschlagsfläche 14 des axial hervorstehenden Teils 18 des Sensors 13 statt. Sobald der Sensor 13 auf diese Weise positioniert ist, kann er mit der Schraube 12 oder einem ähnlichen Befestigungsmechanismus endgültig befestigt werden.

Dank des Freiraumes 15 ist es möglich bei der Installation der Radnabe 1 den Signalgeber 9 beim axialen Einschieben bis an den Sensor 13 reichen zu lassen und diesen gegebenenfalls axial zu verschieben. Da der Sensor 13 zu diesem Zeitpunkt noch nicht festgeschraubt ist, entsteht kein Schaden am Signalgeber 9. Sobald der Signalgeber 9 und die Radnabe 1 installiert sind kann die Positionierung und Befestigung des Sensors 13 in der beschriebenen Weise erfolgen.

Vorteilhafterweise ist das Kabel 11 bei der Installation nicht im Wege, kann aber noch zusätzlich mit einem Kabelbinder befestigt werden. Alternativ oder optional kann eine Kabelschelle mit einem Bolzen verwendet werden. Der Bolzen befestigt die Kabelschelle an einem feststehenden Teil, wie z.B. einem Radträger, und die Kabelschelle erlaubt das Einklemmen des Kabels durch ein schraubengestütztes Verkürzen eines das Kabel umfassenden Metallstreifens. Eine weitere Möglichkeit besteht darin eine Kabeltülle, die das Kabel umfasst in einen Blech-Halter einzuklemmen.

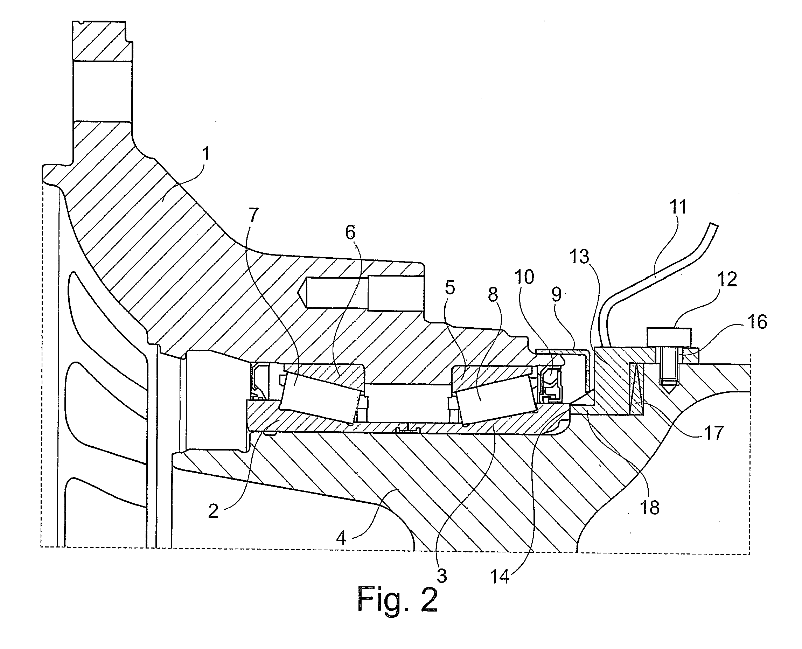

Fig. 2 zeigt eine Radlageranordnung im Längsschnitt zur ihrer Rotationsachse mit einem am Innenring 3 anschlagenden, vorgespannten Sensor 13.

Im Vergleich zur Radlagerung aus Fig. 1 ist der Sensor 13 gegenüber dem Achszapfen 4 vorgespannt. Vorteilhafterweise wird das Vorspannelement 17 vom Sensor 13 axial geführt und radial abgedeckt und damit geschützt. Gegebenenfals sind weitere Maßnahmen zur Haltung des Vorspannelementes 17 notwendig. Das Vorspannelement 17 kann als Stahlfeder oder aus einem elastischen Stoff gebildet sein.

Die Vorspannung erfolgt also in axialer Richtung, wobei die Anschlagsfläche 14 zur Übertragung der Vorspannungskraft auf den Innenring 3 vorgesehen ist. Da die Vorspannung radial innerhalb zum Signalgeber 9 und zum übrigen Sensor 13 angeordnet ist, kann die Dichtungsanordung 10 vorteilhaft vom Signalgeber 9 in radialer und axialer Richtung geschützt werden. Ferner ist vorteilhaft, dass der Sensor 13 und der Signalgeber 9 einen Dichtungsspalt in radialer Richtung bilden.

Im Übrigen wird auf die Ausführungen und Bezugszeichen zur Fig. 1 verwiesen.

Zusammenfassend betrifft die Erfindung eine Radlageranordung, insbesondere für Nutzkraftwagen, mit einem drehenden Außenring einem feststehenden Innenring und zwischen den Ringen abrollbaren Wälzkörpern, wobei der Innenring auf einem feststehenden Achszapfen und der Außenring innerhalb einer einen Signalgeber aufweisende Radnabe fest sind. Es wird das Ziel verfolgt die Installation einer Sensoranordnung an der Radlageranordnung zu vereinfachen und auch die Fahrsicherheit zu erhöhen. Dazu wird ein mit dem Signalgeber in Wechselwirkung stehender Sensor im axialen Anschlag mit dem Innenring angeordnet und anschließend mit einem Befestigungsmittel am Achszapfen befestigt. Damit wird es möglich nach der Installation der Lagerringe den Sensor mittels einer an diesem angeformten Anschlagfläche am Innenring zu positionieren und anschließend permanent mittels einer Schraube oder einem anderen Befestigungsmittel festzumachen.

### Bezugszeichenliste

- 1: Radnabe
- 2: Innenring
- 3: Innenring
- 4: Achszapfen
- 5: Außenring
- 6: Außenring
- 7: Kegelrolle
- 8: Kegelrolle
- 9: Signalgeber
- 10: Dichtungsanordung
- 11: Kabel
- 12: Schraube
- 13: Sensor
- 14: Axialanschlagfläche
- 15: Freiraum
- 16: Langloch
- 17: Vorspannelement
- 18: axial hervorstehender Teil
- 19: signalgebender Bereich
- 20: Sicherungsring

## Patentansprüche

1. Radlageranordung mit einem drehenden Außenring (5,6), einem feststehenden Innenring (3,2) und zwischen den Ringen (3,2,5,6) abrollbaren Wälzkörpern (8,7), wobei der Innenring (3,2) auf einem feststehenden Achszapfen (4) und der Außenring (5,6) innerhalb einer einen Signalgeber (9) aufweisende Radnabe (1) fest sind wobei ein mit dem Signalgeber (9) in Wechselwirkung stehender Sensor (13) im axialen Anschlag mit dem Innering (3) angeordnet ist und mit einem Befestigungsmittel (12,16) am Achszapfen (4) befestigt ist und wobei ein in axialer Richtung hervorstehender Teil (18) des Sensors (13) eine axiale Anschlagfläche (14) aufweist und wobei die axiale Anschlagfläche (14) des Sensors (13) mittels eines Vorspannelementes (17) unter Vorspannung am Innenring (3) anliegt und wobei der axial hervorstehende Teil (18) teilweise oder ganz vom Signalgeber (9) umfasst wird.

2. Radlagereinheit nach Anspruch 1, wobei der Außenring (5,6) einstückig mit der Radnabe (1) ausgebildet ist.

3. Radlagereinheit nach einem der vorhergehenden Ansprüche, wobei das Befestigungsmittel (12,16) des Sensors eine Schraube (12) und ein Langloch (16) ist.

## Claims

1. Wheel bearing arrangement having a rotating outer ring (5, 6), having a static inner ring (3, 2) and having rolling bodies (8, 7) that can roll between the rings (3, 2, 5, 6), wherein the inner ring (3, 2) is fixed to a static axle journal (4) and the outer ring (5, 6) is fixed within a wheel hub (1) that has a signal transmitter (9), wherein a sensor (13) that interacts with the signal transmitter (9) is arranged so as to abut axially against the inner ring (3) and is fastened to the axle journal (4) by a fastening means (12, 16), and wherein a part (18), which projects in the axial direction, of the sensor (13) has an axial abutment surface (14), and wherein the axial abutment surface (14) of the sensor (13) bears under preload against the inner ring (3) under the action of a preload element (17), and wherein the axially projecting part (18) is partially or entirely surrounded by the signal transmitter (9).

2. Wheel bearing unit according to Claim 1, wherein the outer ring (5, 6) is formed integrally with the wheel hub (1).

3. Wheel bearing unit according to one of the preceding claims, wherein the fastening means (12, 16) of the sensor is a screw (12) and a slot (16).

## Revendications

1. Agencement de palier de roue comprenant une bague extérieure rotative (5, 6), une bague intérieure fixe (3, 2) et des corps de roulement (8, 7) pouvant rouler entre les bagues (3, 2, 5, 6), la bague intérieure (3, 2) étant fixée sur un tourillon d'axe fixe (4) et la bague extérieure (5, 6) étant fixée à l'intérieur d'un moyeu de roue (1) présentant un générateur de signaux (9), un capteur (13) en liaison fonctionnelle avec le générateur de signaux (9) étant disposé en butée axiale avec la bague intérieure (3) et étant fixé avec un moyen de fixation (12, 16) sur le tourillon d'axe (4) et une partie (18) du capteur (13) faisant saillie dans la direction axiale présentant une surface de butée axiale (14) et la surface de butée axiale (14) du capteur (13) s'appliquant au moyen d'un élément de précontrainte (17) avec précontrainte contre la bague intérieure (3) et la partie faisant saillie axialement (18) étant entourée en partie ou complètement par le générateur de signaux (9).

2. Unité de palier de roue selon la revendication 1, dans laquelle la bague extérieure (5, 6) est réalisée d'une seule pièce avec le moyeu de roue (1).

3. Unité de palier de roue selon l'une quelconque des revendications précédentes, dans laquelle le moyen de fixation (12, 16) du capteur est constitué par une vis (12) et un trou oblong (16).
